**Europäisches Patentamt**

**European Patent Office**

**Office européen des brevets**

(11) Publication number : **0 490 802 A1**

## (12) EUROPEAN PATENT APPLICATION

(21) Application number : **91500136.6**

(22) Date of filing : **29.11.91**

(51) Int. Cl.⁵ : **E06B 3/96, E04B 2/76, F16B 7/04**

(30) Priority : **12.12.90 ES 9100076**

(43) Date of publication of application :
**17.06.92 Bulletin 92/25**

(84) Designated Contracting States :
**AT BE CH DE DK FR GB GR IT LI LU NL SE**

(71) Applicant : **SERVICIOS MODULARES, S.A.**
**Avda. Estatut, s/n., Naves 6, 7 y 8**
**E-08191 Rubi (Barcelona) (ES)**

(72) Inventor : **Isidoro, Pomar Pieras**
**Avda. Estatut, s/n, Naves, 6, 7 y 8**
**E-08191 Rubi (Barcelona) (ES)**

(74) Representative : **Marques Alos, Fernando**
**Tuset, 34**
**E-08006 Barcelona (ES)**

(54) **Device for joining profiles.**

(57) A joint device for profiles of the type used in the construction of walls and windows and which presents a central nucleus from which a series of prolongations stand out sideways and which define grooves for fixing the joint elements, characterized because the joint element itself is to be found constituted by a flat piece (2) generally of a rectangular shape, one of whose ends (3) is formed in such a way that it allows its being introduced into the groove (11) presented by the profile to be joined, whereas from the rest of the area different rectangular and short flanges (4) emerge, with the central part of the mentioned element bearing a diecast component (5) which is narrower at the end nearest to that of the above mentioned shape and in which there is a concavity (6) at a downward angle, whereas from the extreme end of that diecast piece a sloping flap (7) emerges with this having a central hole through which a screw (8) is to be introduced, advancing at a sloped angle, so that its end remains supported from above against the lower area of the concave area.

Fig. 5

The present Utility Model refers to a device for joining profiles of the type used principally in the construction of removable walls, windows and other similar applications, and which presents, as its fundamental advantage, the obtention of considerable rigidity as from a very simple mechanism.

Currently, the joining of profiles for the manufacture of windows, walls, etcetera is made by means of complicated anchoring systems of joint elements constructed as from screws and similar elements which require a complicated and lengthy assembly process in order to assure rigidity.

The joining device for profiles which constitutes the basis of the present invention accomplishes this purpose with a very simple device as described hereinafter.

The basic element of the invention consists in a piece, metal by preference, which is flat and which at one end has a geometry corresponding to the access of a complementary profile, with this part having an inclined angle flap in a central opening; through this flap a screw is passed at a sloping angle to the aforementioned elements, thus being compelled to come to rest upon the lower part thereof through an area in the device which is duly prepared to this effect.

This element is introduced in a groove situated on one of the profiles and remains accessible in such a way that upon situating two profiles in a perpendicular position between them, the extreme part of the mentioned element remains fastened into the other, and upon tightening the screw will thus tend to enter into the first profile and, upon making that entrance not in a vertical but rather in a sloped position, the aforementioned element advances forward with regards to the profile and makes its joint rigidly with the other; at the same time the joint is reinforced by the tightening of the screw, made in a harder material, into the wall of the profile, assuring in this way and by a simple movement of the screw, the perfect rigidity of the joint between the profiles in a much simpler way that occurs with the joint devices as used currently.

In order to facilitate the explanation, a sheet of drawings accompanies the present report in which is shown, as an illustrative but not limitative example, the case of a joining device for profiles according to the principles of these claims.

In the drawings:

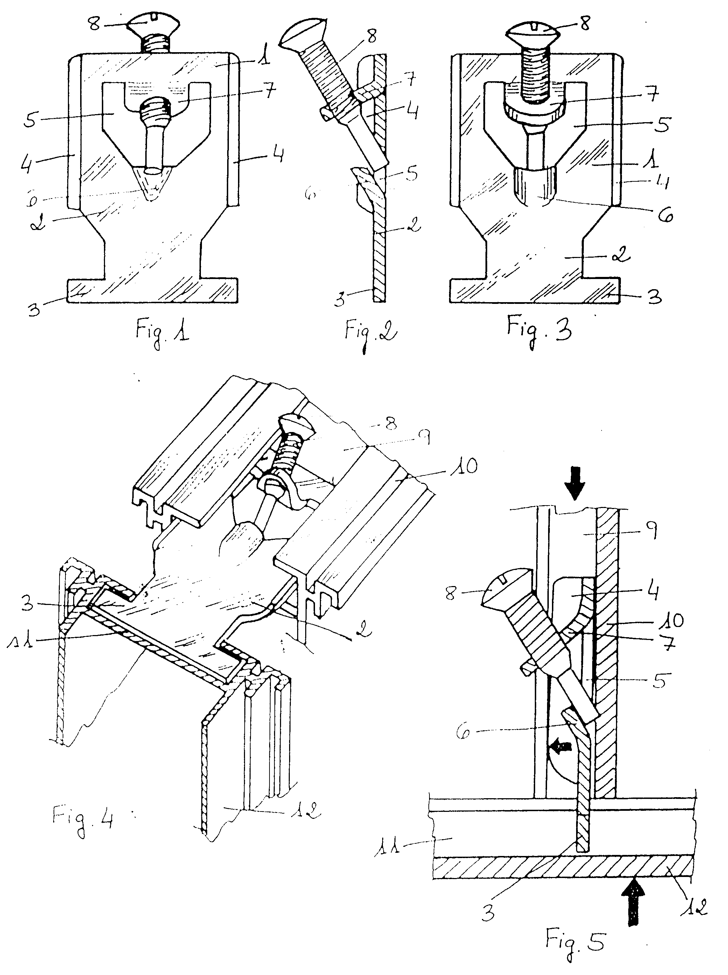

In figures 1, 2 and 3, seen in a back, profile section and frontal upright position respectively, the fundamental element of the joint device for profiles as claimed may be appreciated.

As to figure 4, this shows a perspective view of the device at the moment of proceeding with the joint of those profiles.

Finally, Figure 4 shows a cross-section of the particulars of the form in which the principal element of the joint device as claimed works.

As may be deduced from the mentioned sheet of drawings, the fundamental element of the joint device for profiles - 1 - is constituted by a flat area -2- with one end -3- corresponding to the shape of the access of the profile to which it will be attached, with both sides presenting in the flat area -2- several short flanges -4- and, in the center, a diecast part -5- in the narrowest interior of which a shape -6- has been formed with a concavity pointing downwards whereas the opposite side of the diecast part has a flap folder pointing upwards at a sloping angle -7- provided with a hole though which a screw -8- is to be introduced and which then remains supported underneath in the concavity -6- as mentioned above.

The aforementioned element, in order to be used, is introduced into a groove -9- which is presented by one of the profiles -10- whereas at its end -3- a similar groove -11- is to be situated which will be presented to the complementary profile -12- in a perpendicular position of a profile with regards to the other, which thus justifies the shape of the end of the mentioned element.

Observation of the figures 4 and 5 allows understanding in a clear and true manner the easy joint system that is achieved with the device claimed, as well as at the same time verifying how this joint remains perfectly reinforced.

To make a joint between two profiles such as -10- and -12-, these are to be placed perpendicularly against each other and, previously, the flat area of the element -1- is introduced into the interior of the groove -9- fo the profile -10-, into which it enters quite tightly due to the presence of the flanges -4-.

With the profile being placed in this position, its end -3- is then introduced into the groove -11- of the complementary profile -12-, and bringing the two profiles close together until they remain placed as they appear on figure 5.

At this moment it is sufficient to simply tighten the screw -8- so that its point is pressed at a sloping angle against the lower surface of the groove -9-, due to which two strenghts are produced; a vertical one which tends to push the screw into that base thus reinforcing the joint of the screw with that profile while a further strength at a horizontal angle tends to push the joint element forward thanks to which the end -3- remains blocked in the interior of the groove -11- of the profile -12- thus assuring the perfect rigidity of the joint between these profiles by means of a highly simple procedure.

Anything that does not affect, alter, change nor modify the essence of the joint device described will be variable to the effects of the present Model.

## Claims

1.  A joint device for profiles of the type used in the construction of walls and windows and which presents central nucleus from which a series of prolongations stand out sideways and which define grooves for fixing the joint elements, characterized because the joint element itself is to be found constituted by a flat piece generally of a rectangular shape, one of whose ends is formed in such a way that it allows its being introduced into the groove presented by the profile to be joined, whereas from the rest of the area different rectangular and short flanges emerge, with the central part of the mentioned element bearing a diecast component which is narrower at the end nearest to that of the above mentioned shape and in which there is a concavity at a downward angle, whereas from the extreme end of that diecast piece a sloping flap emerges with this having a central hole through which a screw is to be introduced, advancing at a advancing at a sloped angle, so that its end remains supported from above against the lower area of the concave area.

2. Joint device for profiles as per claim 1, characterized because the length of the lateral flanges will be such that it allows its introduction, with certain tolerance, into the groove that is presented by one of the two profiles to be joined together.

Fig. 1

Fig. 2

Fig. 3

Fig. 4

Fig. 5

**European Patent Office**

# EUROPEAN SEARCH REPORT

Application Number

EP 91 50 0136

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 226 897 (DORMAN) <br> * the whole document * <br> --- | 1,2 | E06B3/96 <br> E04B2/76 <br> F16B7/04 |
| A | DE-A-2 325 148 (REYNOLDS ALUMINIUM EUROPE) <br> * page 4, line 16 - page 6, line 6; figures * <br> --- | 1,2 | |
| A | GB-A-1 314 878 (EDWARD WILLIAMS HOLDINGS LTD.) <br> * the whole document * <br> ----- | 1,2 | |
| | | | **TECHNICAL FIELDS SEARCHED (Int. Cl.5)** <br><br> E06B <br> E04B <br> E04C <br> F16B |

The present search report has been drawn up for all claims

| Place of search | Date of completion of the search | Examiner |
|---|---|---|
| THE HAGUE | 24 MARCH 1992 | BLOMMAERT S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)